Europäisches Patentamt

European Patent Office

Office européen des brevets

(19)

(11) **EP 0 780 147 B1**

(12) **EUROPÄISCHE PATENTSCHRIFT**

(45) Veröffentlichungstag und Bekanntmachung des Hinweises auf die Patenterteilung:
**15.10.2003 Patentblatt 2003/42**

(51) Int Cl.⁷: $B01D\ 3/14$, $B01D\ 3/42$

(21) Anmeldenummer: **96120440.1**

(22) Anmeldetag: **18.12.1996**

(54) **Verfahren zur Regelung einer Trennwandkolonne**

Method for controlling a partitioned distillation column

Méthode pour le contrôle d'une colonne à distillation à paroi de séparation

(84) Benannte Vertragsstaaten:
**BE CH DE FR GB LI NL**

(30) Priorität: **19.12.1995 DE 19547450**

(43) Veröffentlichungstag der Anmeldung:
**25.06.1997 Patentblatt 1997/26**

(73) Patentinhaber: **BASF AKTIENGESELLSCHAFT**
**67056 Ludwigshafen (DE)**

(72) Erfinder:
• **Kaibel, Gerd, Dr.**
**68623 Lampertheim (DE)**

• **Stroezel, Manfred**
**68549 Ilvesheim (DE)**

(74) Vertreter: **Kinzebach, Werner, Dr. et al**
**Patent Attorneys,**
**Reitstötter, Kinzebach & Partner,**
**Sternwartstrasse 4**
**81679 München (DE)**

(56) Entgegenhaltungen:
**DE-A- 3 522 234**      **US-A- 2 684 326**
**US-A- 4 230 533**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur Regelung einer Trennwandkolonne zum Auftrennen eines Zulaufgemisches in drei Fraktionen, bei dem man das Zulaufgemisch in einem mittleren Bereich der Kolonne zuführt und eine Leichtsiederfraktion am Kolonnenkopf, eine Mittelsiederfraktion im mittleren Bereich der Kolonne und eine Hochsiederfraktion am unteren Ende der Kolonne entnimmt.

Destillationsverfahren stellen die wichtigsten Trennverfahren in der chemischen und Erdöl-verarbeitenden Industrie dar. Neue Destillationskolonnen, die einfacher aufgebaut sind und einen geringeren Energieverbrauch aufweisen, sind daher von entscheidender wirtschaftlicher Bedeutung. Dies wird vor allem durch die Tatsache verdeutlicht, daß etwa ein Drittel des gesamten Energiebedarfs dieser Industriezweige auf die destillative Stofftrennung entfällt.

Herkömmlicherweise werden Stoffgemische mit mehr als zwei Komponenten durch Hintereinanderschalten einzelner Destillationskolonnen getrennt. Im Fall von drei, bei unterschiedlichen Temperaturen siedenden Komponenten kann beispielsweise das leichtest siedende Produkt im Kopf der ersten Kolonne als Reinprodukt entnommen werden, während die beiden bei höheren Temperaturen siedenden Komponenten aus dem Sumpf der ersten Kolonne in eine zweite Kolonne geführt werden, wobei dort das bei einer mittleren Temperatur siedende Produkt aus dem Kopf und das bei der höchsten Temperatur siedende Produkt aus dem Sumpf der Kolonne entnommen werden kann.

Aus energetischer Sicht ist dieses Verfahren aber unbefriedigend, denn die beiden höher siedenden Komponenten werden zwar schon in der ersten Kolonne teilweise getrennt, bei Zuführung in die zweite Kolonne tritt aber wieder eine Vermischung ein und die beiden Komponenten müssen unter zusätzlicher Energiezufuhr erneut getrennt werden.

Dieser Nachteil wird bei Destillationskolonnen vermieden, die in ihrem mittleren Bereich Seitenabzugsstellen für eine oder mehrere mittelsiedende Komponenten aufweisen. Die Seitenfraktionen sind jedoch je nach ihrer Position entlang der Kolonne mit der hochsiedenden bzw. leichtsiedenden Komponente verunreinigt, so daß befriedigende Reinheiten der Seitenfraktionen beispielsweise nur über ein höheres Rücklaufverhältnis und eine höhere Heizleistung, folglich also nur mit höherem Energieverbrauch erzielt werden können.

Eine entscheidende Verbesserung wird mit den sogenannten Trennwandkolonnen erreicht. Eine Trennwandkolonne ist beispielsweise in der europäischen Patentanmeldung EP-A-0 122 367 beschrieben. Weitere Beschreibungen des Aufbaus und der Funktion von Trennwandkolonnen finden sich beispielsweise in Chem.-Ing.Techn. **61** (1989) Nr. 2, S. 104-112 und in Gas Separation and Purification, **4**(1990) Nr. 2, S. 109-114. Die Trennwandkolonne erlaubt es, unter geringerem Energieaufwand ein Zulaufgemisch aus drei oder mehr Komponenten in praktisch reine Einzelkomponenten zu trennen. Bei der Trennwandkolonne wird anstelle zweier separater Destillationskolonnen eine einzige Kolonne eingesetzt, die im mittleren Bereich, oberhalb und unterhalb der Zulaufstelle, eine Trennwand zur Verhinderung einer Quervermischung von Flüssigkeits- und Dampfströmen aufweist.

Trotz dieser wirtschaftlichen Vorteile werden Trennwandkolonnen industriell noch nicht in großem Umfang eingesetzt. Ursache hierfür ist die äußerst komplexe Kolonnenregelung, die von zahlreichen, miteinander gekoppelten Größen beeinflußt wird. Wie beispielsweise in TransIChemE **70**(1992) Part A, S. 118-132 beschrieben, sind bei der Auslegung von Trennwandkolonnen insgesamt 11 Parameter aufeinander abzustimmen.

Ziel jeder Kolonnenregelung ist es, einen Betrieb der Kolonne zu gewährleisten, bei dem die geforderten Produktreinheiten der einzelnen Fraktionen unter energieoptimalen Bedingungen erreicht werden.

Trennverfahren in herkömmlichen Destillationskolonnen, beispielsweise in den bekannten Seitenabzugskolonnen, werden häufig mathematisch modelliert, wobei das mathematische Modell Aussagen über den optimalen Wertebereich der Betriebsparameter und auch Hinweise zur Regelung dieser Parameter beim Auftreten von Störungen liefert. Für manche Trennprozesse ist jedoch noch kein befriedigendes Simulationsmodell bekannt. In diesem Fall muß auf eine experimentelle Optimierung der Anlage im Betrieb zurückgegriffen werden. Auf schwankende Betriebsbedingungen kann mit diesem Verfahren nur schwer reagiert werden.

Die mathematische Modellierung der Destillation eines mehrkomponentigen Gemisches in einer Trennwandkolonne ist noch komplizierter. Bisher bekanntgewordene Modellrechnungen zum Betrieb von Trennwandkolonnen verdeutlichen eher die möglicherweise auftretenden Instabilitätsprobleme beim Betrieb als daß sie praktisch verwertbare Hinweise zum optimalen Regeln der Kolonne geben. Eine Beschreibung der auftretenden Instabilitätsprobleme findet sich in Process Engineering, Februar 1993, S. 33-34. Hier werden laufende Forschungsarbeiten beschrieben, die dynamische Simulationsprogramme benutzen. Für die Praxis umsetzbare Ergebnisse werden jedoch nicht mitgeteilt.

In Ind.Eng.Chem.Res. **34**(1995), S. 2094-2103 wird über Forschungsergebnisse der Universität Trondheim zur Regelung dieser Kolonnensysteme berichtet. Es wurde geschildert, daß vor allem in den Fällen, in denen hohe Produktreinheiten angestrebt werden, gravierende Probleme zu erwarten sind. Teilweise ergeben sich für ein gegebenes Flüssigkeitsaufteilungsverhältnis am oberen Ende der Längsunterteilung mehrere mögliche Lösungen, teilweise existieren sogenannten "Löcher" im Betriebsbereich, für die es nicht möglich ist, die gewünschten Produktspezifikationen zu erhalten. Als Lösungsvorschlag wird eine umfassende mathematische Analyse angegeben, die für jeden Einzelfall durchzuführen ist. Allgemein anwendbare Hinweise finden sich nicht.

In der deutschen Patentanmeldung DE-A-35 22 234 ist ein Verfahren zum energieoptimalen Betreiben einer Trennwandkolonne beschrieben. DE-A-35 22 234 geht von der Tatsache aus, daß ein wirksamer und energiegünstiger Betrieb der Trennwandkolonne nur möglich ist, wenn die Aufteilung des Brüdenstroms am unteren Ende der Längsunterteilung und die Aufteilung des Flüssigkeitsstroms am oberen Ende der Längsunterteilung richtig erfolgt. Insbesondere dürfen aus dem Zulaufteil nach oben nur Leichtsieder und Mittelsieder und nach unten nur Hochsieder und Mittelsieder austreten. Beim Betrieb mit einem falsch eingestellten Aufteilungsverhältnis können die erforderlichen Reinheiten der Fraktionen nur über eine höhere Heizenergie erreicht werden. Zur Einhaltung dieser Bedingung wird in der DE-A-35 22 234 vorgeschlagen, im Bereich der Längsunterteilung der Kolonne vier Temperaturmeßwerte zu bestimmen, die als Regelgrößen die Aufteilung der Flüssigkeits- und Brüdenströme am oberen bzw. unteren Ende der Längsunterteilung beeinflussen. Dabei werden je zwei Meßwerte im oberen bzw. unteren Bereich der Trennwand gemessen, wobei man die entsprechenden Temperaturmeßstellen auf gleicher Höhe der Kolonne im Zulaufteil bzw. im Entnahmeteil anordnet. Dabei wird so geregelt, daß die Temperatur im Zulaufteil an der oberen Meßstelle stets niedriger oder höchstens gleich hoch ist wie im Entnahmeteil an der oberen Meßstelle und die Temperatur im Zulauf teil an der unteren Meßstelle höher oder mindestens genauso hoch ist wie an der entsprechenden Meßstelle im Entnahmeteil.

Mit dem in der DE-A-35 22 234 beschriebenen Regelungsverfahren ist unter bestimmten Bedingungen ein energieoptimaler Betrieb der Trennwandkolonne möglich. Für eine allgemeine Brauchbarkeit weist das Verfahren jedoch gewisse Nachteile auf. So ist die Bedingung, daß jeweils zwei Temperaturmeßstellen im Zulauf- und Entnahmeteil auf gleicher Höhe angeordnet sind, dann nicht realisierbar, wenn Zulauf- und Entnahmeteil, wie in der industriellen Praxis häufig erforderlich, verschieden große Trennstufenzahlen aufweisen. Die Vorschriften der DE-A-35 22 234 können in diesen Fällen nicht einfach durch proportionale Übertragung auf die unterschiedlichen Trennstufenzahlen angepaßt werden. Auch das geforderte Temperaturkriterium ist nicht allgemeingültig und liefert nur in bestimmten Fällen die gewünschte Lösung mit minimalem Energiebedarf. Ein weiterer Nachteil des Regelungsverfahrens der DE-A-35 22 234 beruht auf der ausschließlichen Verwendung von Temperaturwerten. Wenn Stoffe getrennt werden, deren Siedepunkte eng beieinanderliegen, treten im mittleren Bereich der Kolonne Temperaturdifferenzen von weniger als 1°C auf, die mit dem technisch üblichen Meßgeräten nicht mit ausreichender Zuverlässigkeit erfaßbar sind.

Aufgabe der vorliegenden Erfindung ist es daher, das aus DE-A-35 22 234 bekannte Regelungsverfahren so weiterzubilden, daß ein für die verschiedenen in der betrieblichen Praxis vorkommenden Anwendungsfälle allgemein verwendbares Regelungsverfahren zum energieoptimalen Betrieb einer Trennwandkolonne bereitgestellt wird.

Gelöst wird diese Aufgabe durch ein Verfahren zur Regelung einer Trennwandkolonne gemäß den Merkmalen des Hauptanspruchs.

Bei dem erfindungsgemäßen Verfahren werden Meßwerte für Konzentrationswerte an bestimmten Stellen im Bereich der Längsunterteilung der Kolonne mittels direkter oder indirekter Meßmethoden gewonnen. Mit diesen Meßwerten bildet man die Regelungseingriffe zur Regelung der Kolonne. Die Regelungsstrategie wird in zwei Hierarchieebenen gegliedert, wobei die Stelleingriffe der zweiten Hierarchieebene die Regelungseingriffe der ersten Hierarchieebene nicht beeinflussen. Dabei ist eine solche Auftrennung der Regelungsstrategie in zwei entkoppelte Hierarchieebenen möglich, womit die Regelungsaufgabe beträchtlich vereinfacht wird.

Eine bevorzugte Ausführungsform des erfindungsgemäßen Regelungsverfahrens ist Gegenstand der Unteransprüche.

Hier wird mit den Stelleingriffen der ersten übergeordneten Hierarchieebene in an sich bekannter Weise die Abzugsbilanz des Kopf-, Seiten- und Sumpfproduktes beeinflußt. Mit den Stelleingriffen der zweiten untergeordneten Hierarchieebene beeinflußt man die Aufgabemenge oder das Aufteilungsverhältnis des Flüssigkeitsstroms am oberen Ende und/oder die Aufgabemenge oder das Aufteilungsverhältnis des Brüdenstroms am unteren Ende des längsunterteilten Bereichs der Kolonne sowie gegebenenfalls die Heizleistung und/oder die Zulaufmenge. Das erfindungsgemäße Verfahren ermöglicht es insbesondere, mit den Stelleingriffen der zweiten Hierarchieebene den Konzentrationsverlauf entlang der Kolonne vorteilhaft zu regulieren, ohne daß die herkömmlichen Regelungsstrategien der ersten Hierarchieebene beeinflußt werden. So wird ermöglicht, daß ein für die jeweilige Trennaufgabe optimales Konzentrationsprofil in der Kolonne eingehalten wird.

Da die Aufteilung des Brüdenstroms am unteren Ende des längsunterteilten Bereichs der Kolonne einen wesentlich geringeren Einfluß auf das gewünschte Konzentrationsprofil in der Kolonne hat als das Aufteilungsverhältnis des Flüssigkeitsstroms am oberen Ende der Trennwand, wird bei einer vereinfachten Ausführungsform des erfindungsgemäßen Verfahrens mit den Stelleingriffen der zweiten Hierarchieebene nur die Aufgabemenge oder das Aufteilungsverhältnis des Flüssigkeitsstroms am oberen Ende der Trennwand geregelt. Für den Brüdenstrom kann man in diesem Fall beispielsweise ein Aufteilungsverhältnis von 1 : 1 auf Zulaufund Entnahmeteil (etwa durch Halbierung der Gesamtquerschnittsfläche) vorsehen.

Die Erfindung Zeichnet sich u.a. dadurch aus, daß man zur Bildung der Stelleingriffe der ersten Hierarchieebene keine Meßwerte aus dem Zulaufteil der Trennwandkolonne verwendet. Insbesondere werden zur Bildung von Stelleingriffen, die die Entnahme des Seitenproduktes beeinflussen, bevorzugt lediglich Meßwerte aus dem Entnahmeteil der Kolonne verwendet. Dagegen werden die Stelleingriffe der zweiten Hierarchieebene überwiegend, bevorzugt sogar ausschließlich, aus Meßwerten aus dem Zulaufteil gebildet.

Um gut nutzbare Meßwerte zu erhalten, empfiehlt es sich, Meßwerte M1 im Bereich der Zulaufstelle zu bestimmen, wobei sich die Meßstelle bevorzugt in einer Höhe von 0,2 bis 3 theoretischen Trennstufen oberhalb der Zulaufstelle befindet. Meßwerte M2 werden an einer höheren Stelle im Zulauf teil bestimmt, wobei die Meßstelle bevorzugt so gewählt wird, daß die Meßwertdifferenz zwischen M1 und M2 etwa 1/5 bis 4/5, bevorzugt 1/2 der Meßwertdifferenz im ausgeregelten Zustand zwischen der Zulaufstelle und dem oberen Ende des Zulaufteils entspricht. Zur Bestimmung der Lage dieser Meßstelle geht man demnach von dem gewünschten Konzentrationsprofil aus und ermittelt die Stelle der Kolonne zwischen Zulauf und oberem Ende der Trennwand, an der die theoretisch erwartete Konzentration möglichst mitten zwischen der Konzentration an der Zulaufstelle und der Konzentration am oberen Ende der Trennwand liegt. Bei. linearem Konzentrationsverlauf wäre dies also auf halber Höhe zwischen Zulaufstelle und oberem Ende der Trennwand.

Eine weitere Meßstelle M4 kann im unteren Bereich des Zulaufteils vorgesehen sein, wobei die Lage der Meßstelle wieder so gewählt ist, daß die Meßwertdifferenz zwischen M1 und M4 etwa 1/5 bis 4/5, bevorzugt 1/2 der Meßwertdifferenz im ausgeregelten Zustand zwischen der Zulaufstelle und dem unteren Ende des Zulaufbereichs entspricht.

Bevorzugt befindet sich eine weitere Meßstelle M6 im Bereich des oberen Endes der Trennwand, bevorzugt in einer Höhe von 0,2 bis 3 theoretischen Trennstufen oberhalb der Längsunterteilung der Kolonne. Meßwerte M3 werden an einer Stelle im oberen Entnahmeteil bestimmt, die so gewählt ist, daß die Meßwertdifferenz zwischen M6 und M3 möglichst etwa 1/5 bis 4/5, bevorzugt 1/2 der Meßwertdifferenz im ausgeregelten Zustand zwischen der Seitenentnahmestelle und dem oberen Ende der Längsunterteilung entspricht.

Es kann ein weiteres Paar von Meßstellen vorgesehen werden, wobei Meßwerte M7 am unteren Ende der Längsunterteilung, bevorzugt in einem Bereich von 0,2 bis 3 theoretischen Trennstufen unterhalb der Längsunterteilung bestimmt werden und Meßwerte M5 in einem unteren Bereich des Entnahmeteils bestimmt, wobei die Lage der Meßstelle so gewählt ist, daß die Meßwertdifferenz zwischen M7 und M5 etwa 1/5 bis 4/5, bevorzugt 1/2 der Meßwertdifferenz im ausgeregelten Zustand zwischen der Seitenentnahmestelle und dem unteren Ende der Längsunterteilung entspricht.

Auch für die Auswahl der Meßstellen M3, M4 und M4 kann die, für M2 beschriebene Vorgehensweise analog angewendet werden.

Die Stelleingriffe der zweiten Hierarchieebene werden nun bevorzugt über eine Vorschrift geregelt, bei der man eine oder mehrere Differenzen der Meßwerte (M2-M1), (M4-M1), (M3-M6) und (M5-M7) mit individuellen Regelverstärkungen multipliziert und anschließend additiv verknüpft. Eine bestimmte Meßwertdifferenz Mi-Mj kann gleichzeitig für mehrere Stelleingriffe genutzt werden. Es ist jedoch auch möglich, mehrere Meßfühler zu benutzten, wobei sich ihre Lage geringfügig unterscheiden kann.

Eine entsprechende Regelungsvorschrift kann für die Regelung der Heizleistung und/oder der Zulaufmenge des zu trennenden Produktes aufgestellt werden.

Sollte bei den obengenannten Meßwertdifferenzen ein Meßwert eine untergeordnete Rolle spielen, also beispielsweise weniger als 20% des Differenzwertes ausmachen, kann auch statt der Meßwertdifferenz den dominierenden Meßwert allein zur Bildung der Stellgröße herangezogen werden.

Die Regelungsverstärkungen, d.h. die Gewichtungsfaktoren der einzelnen Meßwertdifferenzen werden zunächst umgekehrt proportional zu den jeweiligen mittleren Meßwertdifferenzen gewählt. In Betrieb werden die Regelverstärkungen nach an sich bekannten Regeln optimiert. Dabei werden die zunächst relativ niedrigen Reglerverstärkungen allmählich erhöht, bis eine möglichst hohe Empfindlichkeit bei noch ausreichender Stabilität erreicht ist.

In der ersten Hierarchieebene wird beispielsweise die Kopfabzugsmenge oder die Rücklaufmenge der Flüssigkeit am Kolonnenkopf oder das Rücklaufverhältnis der Flüssigkeit am Kolonnenkopf über ein oder mehrere Meßwerte aus dem oberen Teil der Trennwandkolonne gesteuert. Dies ist für die Stabilität der Regelung vor allem deshalb sinnvoll, weil bei den Leichtsiederkomponenten häufig besonders große verwertbare Temperaturdifferenzen vorliegen. Bei nur kleinen Kopfabzugsmengen, die bezogen auf die Zulaufmenge beispielsweise weniger als 5% betragen, ist die Rücklaufmenge als Stelleingriff besonders bevorzugt.

Die Seitenentnahme erfolgt bevorzugt in flüssiger Form, wobei ein oder mehrere Meßwerte aus dem Entnahmeteil der Trennwandkolonne zur Bildung der Regeleingriffe herangezogen werden.

Die Standhaltung im Verdampferkreislauf am unteren Ende der Trennwandkolonne kann bei einer relativ hohen Sumpfabzugsmenge, bevorzugt bei mehr als 20%, bezogen auf die Zulaufmenge, über die Entnahme des Sumpfabzugsproduktes selbst gesteuert werden. Ist aber die Sumpfabzugsmenge gering, beispielsweise geringer als 10% der Zulaufmenge, und beträgt die Seitenentnahmemenge beispielsweise mehr als 70% der Zulaufmenge, kann die Standhaltung im Verdampferkreislauf über die Entnahme des Seitenproduktes gesteuert werden und die Sumpfentnahmemenge kann über ein oder mehrere Meßwerte aus dem Entnahmeteil und/oder dem unteren Ende der Trennwandkolonne gesteuert werden.

Erste Erfahrungen zeigen, daß die Regelung der Stelleingriffe der ersten und der zweiten Hierachieebene mit reinen Proportionalreglern besonders stabil möglich ist. Für die Stelleingriffe der ersten Hierachieebene können auch die in der herkömmlichen Kolonnenregelung überwiegend verwendeten PI- oder PID-Regler eingesetzt werden.

Die bei dem erfindungsgemäßen Verfahren notwendigen Konzentrationsmeßwerte können beispielsweise durch gaschromatographische Messungen oder andere Konzentrationsmessungen bestimmt werden. Derartige Verfahren sind aber teuer.

Es ist jedoch bekannt, daß in vielen Fällen die Konzentrationen entlang der Kolonne mit ausreichender Signifikanz mit den dort herrschenden Temperaturen korreliert werden können. Ein wesentlich preisgünstigeres erfindungsgemäßes Verfahren kann daher realisiert werden, wenn anstelle von Konzentrationsmessungen Temperaturmessungen durchgeführt werden. Falls keine ausreichend signifikanten Temperaturmeßwerte zur Verfügung stehen, beispielsweise infolge geringer Siedepunktdifferenzen der zu trennenden Stoffe, können alternative Meßwerte eingesetzt werden, beispielsweise sind auch Messungen des Brechungsindex oder Absorptionsmessungen denkbar.

Da die Temperaturmessung mit Abstand die preiswerteste Meßmethode ist, kann beispielsweise auch vorgesehen werden, daß in den Bereichen der Kolonne, in denen noch verwertbare Temperaturwerte vorliegen, eine Temperaturmessung durchgeführt wird, während in anderen Kolonnenbereichen auf alternative Meßmethoden zurückgegriffen werden muß. Bestimmend für die auftretenden Temperaturwerte in der Kolonne sind die Mengenanteile an Leicht-, Mittelund Schwersieder im Zulaufgemisch sowie die Reinheitsanforderungen an die einzelnen Fraktionen und die Siedepunktsdifferenzen der jeweiligen Komponenten.

Bei Verwendung von Temperaturwerten für die Regelung der ersten Hierachieebene ist es vorteilhaft, wenn der Differenzdruck längs der Kolonne konstant gehalten wird. Dies gilt speziell für Destillationen unter Vakuum, da sich hier Druckänderungen besonders stark auf die Temperaturwerte auswirken und die Regelung negativ beeinflussen. Es ist daher erwünscht, daß eine zeitlich möglichst konstante Zulaufmenge vorliegt, und der Energieeintrag und damit der Differenzdruck möglichst konstant gehalten wird.

Sollte dies jedoch nicht möglich sein, so kann in der oben beschriebenen Weise der Energieeintrag durch Regelung der Kolonnenbeheizung und/oder der Zulaufmenge beeinflußt werden.

Aus Gründen der höheren Meßgenauigkeit wird man Temperaturmessungen bevorzugt in der Flüssigphase durchführen. Im Fall von Konzentrationsmessungen werden bevorzugt ein oder mehrere charakteristische Hochsiederkomponenten im oberen Trennwandbereich des Zulaufteils und im unteren Trennwandbereich des Entnahmeteils bzw. Leichtsiederkomponenten im unteren Trennwandbereich des Zulaufteils und im oberen Trennwandbereich des Entnahmeteils der Kolonne gemessen.

Infolge des im Vergleich zu den konventionellen Seitenabzugskolonnen schwierigeren Regelungsverhaltens ist eine gute Stationarität der äußeren Betriebsbedingungen zu fordern. Der Druck am Kolonnenkopf sollte über eine Druckregelung auf +/- 5%, bevorzugt +/- 1%, bezogen auf den Absolutdruck am Kondensator oder nach den Kondensatoren am Kopf der Kolonne konstant gehalten werden, um Störeinflüsse auf die Meßwerte möglichst gering zu halten. Bei Arbeiten im Unterdruckbereich ist es vor allem wichtig, den Differenzdruck über die Kolonne über eine Ansteuerung der dem Verdampfer am Sumpf der Kolonne zugeführten Menge des Heizmediums auf +/- 10%, bevorzugt +/- 2%, bezogen auf den Absolutdruck, nach dem Kondensator oder nach den Kondensatoren am Kopf der Kolonne konstant zu halten.

Dies gilt insbesondere für den Fall hoher theoretischer Trennstufenzahlen und für Meßstellen, die in der Nähe des unteren Kolonnenendes liegen.

Auch die Enthalpie des Zulaufs sollte möglichst konstant gehalten werden. Mögliche Temperaturschwankungen des Zulaufs sollten um so geringer gehalten werden, je höher die Reinheitsanforderungen an die Mittelsiederfraktion, die als Seitenprodukt entnommen wird, gestellt werden. Bevorzugt wird die Temperatur des Zulaufgemisches auf +/- 3°C konstant gehalten. Flüssig zulaufende Gemische werden bevorzugt, wobei die Temperatur des Gemisches in einem Bereich von 5°C um die Siedetemperatur des Zulaufgemisches bei dem Kolonnendruck an der Zulaufstelle liegen sollte.

Das erfindungsgemäße Verfahren zur Regelung von Trennwandkolonnen und thermisch gekoppelten Kolonnen ist auch bei verschieden hohen Trennstufenzahlen in den einzelnen Kolonnenteilen durchführbar.

Soweit für die Regelung der Stelleingriffe der zweiten Hierachieebene Differenzen der Meßwerte genutzt werden, ist diese Regelung gegenüber unterschiedlichen Differenzdrücken infolge von Schwankungen der Heizleistung recht unempfindlich.

Mit dem erfindungsgemäßen Regelungsverfahren ist eine robuste Regelung der Trennwandkolonne oder der thermisch gekoppelten Kolonne möglich, ohne daß ein zusätzlicher Aufwand für spezielle dynamische Simulationen notwendig wäre.

Wie in der Destillationstechnik allgemein üblich, gibt es jedoch für jedes Destillationsproblem individuell optimierte Einzellösungen. Diese Optimierung wird über Erfahrungsregeln hinsichtlich der Einstellung von Regelverstärkungen, von Integral- und Differentialanteilen bei den einzelnen Reglern durchgeführt und erfolgt üblicherweise erst bei dem Betrieb der Produktionsanlage. Hierzu werden unterstützend auch statische und/oder dynamische Simulationsrechnungen durchgeführt, um einzelne Reglereinstellungen entweder vorab zu bestimmen oder bei laufendem Betrieb weiter zu optimieren. Diese Arbeitstechniken zur Feinoptimierung lassen sich auch bei der erfindungsgemäßen Regelung von Trennwandkolonnen und thermisch gekoppelten Kolonnen anwenden. Sie können gegebenenfalls zu Einzellösungen führen, die nur einen Teil der beschriebenen Merkmale aufweisen und eventuell mit weniger Meßwerten auskommen. Insbesondere ist es für die rasche Einstellung des optimalen Betriebszustandes hilfreich, wenn man auf die Ergebnisse von stationären Simulationsrechnungen zurückgreifen kann, da sie die zu erwartenden Temperatur- und Konzentrationsverläufe in den einzelnen Kolonnenabschnitten zeigen.

Die Durchführung des erfindungsgemäßen Verfahrens erfordert gewisse bauliche Voraussetzungen der Destillationskolonne. Dies betrifft insbesondere den obersten Trennwandbereich des Zulaufteils bzw. den untersten Trennwandbereich des Entnahmeteils, in denen besonders starke Schwankungen der Flüssigkeitsberieselungsdichte auftreten. In diesen Kolonnenabschnitten soll der Arbeitsbereich der Trennböden, d.h. der ohne Einbußen an Trennwirksamkeit mögliche Durchsatz, bzw. im Fall von Packungskolonnen der Arbeitsbereich der Packungen und insbesondere der Flüssigkeitsverteiler die Spanne von mindestens 1:3, bevorzugt aber 1:10, überdecken. Dabei bedeutet ein Arbeitsbereich von 1:3, daß eine entsprechend dimensionierte Kolonne Flüssigkeitsströme beispielsweise zwischen 1000 und 3000 l/h bewältigen kann. Eine minimale Flüssigkeitsberieselungsdichte muß durch regelungstechnische Maßnahmen sichergestellt sein. Bei Packungskolonnen sind im Bereich der Trennwand besonders hohe Anforderungen an die Verteilgüte der Flüssigkeitsverteiler zu stellen. Dabei ist die Verteilgüte in Richtung parallel zur Trennwand besonders wichtig. Um die gleichmäßige Flüssigkeitsverteilung in der Kolonne nicht durch den Ausgasungsvorgang zu beeinträchtigen, wird bei leicht überhitzten Zulaufgemischen vorteilhaft die Anbringung eines Ausdampfgefäßes vorgesehen. Leicht unterkühlte Zulaufgemische werden dagegen bevorzugt über den Ablaufschacht des über der Zulaufstelle angeordneten Flüssigkeitssammlers geführt und mit dieser Flüssigkeit vermischt.

Eine bevorzugte Anordnung der Meßstellen beim erfindungsgemäßen Verfahren wird in der beigefügten Zeichnung dargestellt.

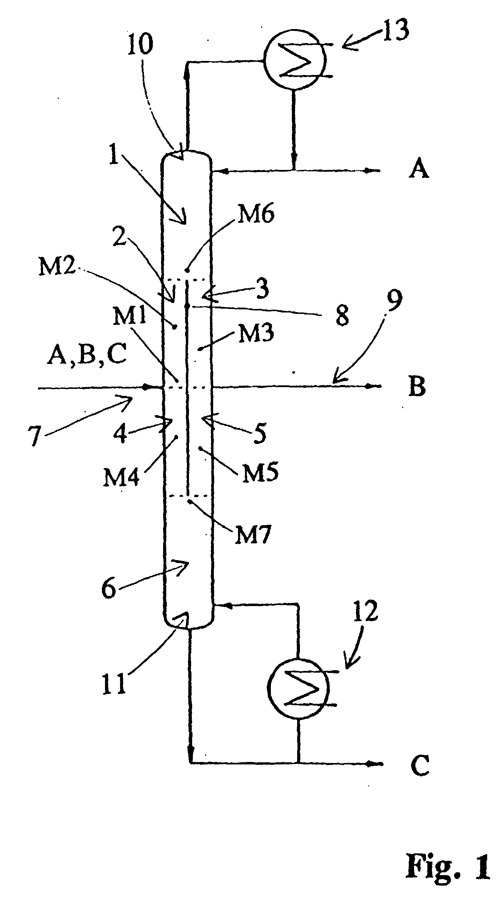

Dabei zeigt Figur 1 die schematische Seitenansicht einer Trennwandkolonne mit den bevorzugten Meßstellen Mi.

Die Trennwandkolonne aus Figur 1 weist einen oberen Bereich 1 und einen unteren Bereich 6 auf. Im mittleren Bereich der Kolonne ist oberhalb und unterhalb der Zulaufstelle 7 eine Trennwand 8 angeordnet, die diesen Kolonnenbereich in einen Zulaufteil 2,4 und Entnahmeteil 3,5 trennt. Bei der in Figur 1 dargestellten speziellen Ausführungsform befindet sich der Seitenabzug 9 auf gleicher Höhe wie der Zulauf 7. An der Zulaufstelle 7 oder bevorzugt dicht darüber ist eine Meßstelle M1 angeordnet. Eine weitere Meßstelle M2 befindet sich etwa auf halber Höhe zwischen der Zulaufstelle 7 und dem oberen Ende der Trennwand 8. Eine Meßstelle M4 befindet sich im unteren Bereich 4 des Zulauf teils, etwa auf halber Höhe zwischen der Zulaufstelle 7 und unterem Ende der Trennwand 8. Im Entnahmeteil ist eine Meßstelle M3 im oberen Bereich 3 des Entnahmeteils und eine Meßstelle M5 im unteren Bereich 5 des Entnahmeteils angeordnet. Eine Meßstelle M6 ist etwas oberhalb der Trennwand 8 im oberen Bereich 1 der Kolonne und eine Meßstelle M7 etwas unterhalb der Trennwand 8 im unteren Bereich 6 der Trennwandkolonne angeordnet. Bei den Meßstellen können beispielsweise Widerstandthermometer oder Thermoelemente angeordnet sein, die ihre Meßwerte auf elektrischem Weg zu einer (nicht dargestellten) Regelungseinheit übermitteln.

Bei dem in Figur 1 dargestellten Fall besteht das Zulaufgemisch aus drei Fraktionen A, B, C und wird der Kolonne an der Zulaufstelle 7 zugeführt. Idealerweise wird das Gemisch so aufgetrennt, daß aus dem unteren Bereich 4 des Zulaufteils nur die Komponenten B und C in die Bereiche 5 und 6 gelangen, während aus dem oberen Bereich 2 des Zulaufteils nur die Komponenten A und B in die Bereiche 1 und 3 der Kolonne gelangen. Die Leichtsiederfraktion A wird am Kolonnenkopf 10, die Mittelsiederfraktion B am Seitenabzug 9 im mittleren Bereich des Entnahmeteils 3,5 der Kolonne und die Hochsiederfraktion C im Sumpf 11 am unteren Ende der Kolonne entnommen.

Nicht dargestellt sind die Stellvorrichtungen selbst, wie z.B. Flüssigkeitsverteiler am oberen Ende der Trennwand. Schematisch sind lediglich eine Heizquelle 12 am Kolonnensumpf und ein Kondensator 13 am Kolonnenkopf dargestellt.

Im folgenden wird nun ein Anwendungsbeispiel des erfindungsgemäßen Verfahrens detaillierter beschrieben:

Dreistoffgemische verschiedener Zusammensetzung aus n-Hexan, n-Heptan und n-Octan wurden bei Normaldruck getrennt. Der Destillationsaufbau bestand aus einer Füllkörperkolonne aus Glas mit einem Durchmesser von 70 mm. Als Füllkörper wurden Maschendrahtringe verwendet. Die Kolonne umfaßte einen oberen gemeinsamen Teil mit 0,5 m Schütthöhe, einen längsunterteilten Bereich mit insgesamt 1,25 m Schütthöhe und einen unteren gemeinsamen Bereich mit 1,0 m Schütthöhe. Der längsunterteilte Bereich bestand aus einem Kolonnenschuß, in den eine 3 mm starke Glasplatte mittig eingeschoben und eingeschmolzen war. Im Zulauf teil und im Entnahmeteil betrug die Schütthöhe oberhalb der Zulauf- bzw. Entnahmestelle jeweils 0,5 m und unterhalb jeweils 0,75 m. Die Aufteilung der Flüssigkeit am Kolonnenkopf sowie oberhalb der Längsunterteilung wurde jeweils mit einem Schwenktrichter vorgenommen, der mit einem Elektromagneten angesteuert wurde. Die Gasaufteilung wurde nicht gezielt beeinflußt. Am Kolonnenkopf wurde der Brüden in einem mit Kühlwasser beaufschlagten Kondensator aus Glas kondensiert. Die Beheizung am Kolonnensumpf erfolgte elektrisch über zwei Heizkerzen. Zur Vermeidung von Wärmeverlusten wurden doppelwandige, evakuierte und verspiegelte Kolonnenschüsse eingesetzt. Zusätzlich wurden elektrisch beheizte Heizmanschetten angebracht, wobei die Beheizung so eingestellt wurde, daß die Temperatur der Heizmanschette mit der gemessenen Innentemperatur in der Kolonne möglichst gut übereinstimmte. Sowohl die Zulaufmenge als auch die Entnahmemenge an Kopf, Seite und Sumpf wurde über Waagen erfaßt. Die Analyse wurde gaschromatografisch durchgeführt.

Bei den Versuchen wurden nacheinander 5 verschiedene Zulaufgemische getrennt:

| Konzentrationen(Massen-%) | Gemisch | 1 | 2 | 3 | 4 | 5 |
|---|---|---|---|---|---|---|
| n-Hexan | | 28,7 | 34,9 | 20,2 | 25,0 | 25,0 |
| n-Heptan | | 33,3 | 30,4 | 37,3 | 50,0 | 25,0 |
| n-Octan | | 38,0 | 34,7 | 42,5 | 25,0 | 50,0 |

Die Meßzeit betrug jeweils 1 h. Vor Beginn der Messung wurde die Kolonne bereits 1 h betrieben, um einen stationären Zustand zu erreichen. Die Zulaufmenge betrug jeweils 3 000 g/h.

Als Meßwerte wurden Temperaturmessungen benutzt. Die einzelnen Meßstellen wiesen innerhalb der Füllkörperschüttungen folgende Lagen auf:

M1:    5 cm oberhalb der Zulaufstelle
M2:    25 cm oberhalb der Zulaufstelle
M4:    25 cm unterhalb der Zulaufstelle
M8:    15 cm oberhalb des oberen Endes der Trennwand
M9:    60 cm oberhalb des unteren Kolonnenendes.

Die Stelleingriffe der 1. Hierarchieebene waren (Mengen in g/h; Temperaturmessungen in °C):

-    das Rücklaufverhältnis mit der Regelvorschrift

$$v = 3,65 + 1,4 \times (M8 - 72{,}5°C)$$

-    die Sumpfabzugsmenge mit der Regelvorschrift

$$m_{Sumpf} = 1000 + 77 \times (M9 - 113{,}2°C)$$

-    die Seitenabzugsmenge wurde über die Standhaltung im Verdampfer gesteuert.

Die Stelleingriffe der 2. Hierarchieebene waren (Heizleistung in Watt; Temperaturmessungen in °C) :

-    das Aufteilungsverhältnis der Flüssigkeit am oberen Ende der Trennwand mit der Regelvorschrift

$$m_{Zulaufteil}/m_{Entnahmeteil} = 0,2 + 0,023 \times (M4 - M1) + 0,02 \times (M1 - M2)$$

-    die Heizleistung im Verdampfer mit der Regelvorschrift

$$Q = 560 - 5 \times (M4 - M1) - 18 \times (M1 - M2).$$

Die Regler waren jeweils als Proportionalregler ausgebildet. Die jeweiligen Regelvorschriften wurden durch eine mathematische Simulation vorab ermittelt und geeignete Stellen für die Temperaturmessungen ausgewählt.

Am Ende der 5-stündigen Versuchszeit konnte die n-Hexanfraktion mit einer Reinheit von 99,8 %, die n-Heptanfraktion mit einer Reinheit von 99,7 % und die n-Octanfraktion mit einer Reinheit von 99,8 % entnommen werden.

**Patentansprüche**

1. Verfahren zur Regelung einer Trennwandkolonne zum Auftrennen eines Zulaufgemisches in drei Fraktionen, bei dem man das Zulaufgemisch in einem mittleren Bereich der Kolonne zuführt und eine Leichtsiederfraktion am Kolonnenkopf, eine Mittelsiederfraktion im mittleren Bereich der Kolonne und eine Hochsiederfraktion am unteren Ende der Kolonne entnimmt, wobei man

   - Meßwerte für Konzentrationswerte an bestimmten Stellen im Bereich der Längsunterteilung der Kolonne mittels direkter oder indirekter Meßmethoden gewinnt,
   - aus diesen Meßwerten Regelungseingriffe zur Regelung der Kolonne bildet,
   - die Regelungsstrategie in zwei Hierachieebenen gliedert, wobei die Stelleingriffe der zweiten Hierarchieebene die Regelung der Stelleingriffe der ersten Hierarchieebene nicht beeinflussen,

   wobei man die Stelleingriffe der ersten Hierarchieebene ohne Meßwerte aus einem zulaufteil (2,4) der Kolonne bildet und die Stelleingriffe der zweiten Hierarchieebene überwiegend aus Meßwerten aus dem Zulaufteil (2,4) der Kolonne bildet.

2. Verfahren gemäß Anspruch 1, **dadurch gekennzeichnet, dass** man die Stelleingriffe der zweiten Hierarchieebene ausschließlich aus Meßwerten aus einem Zulauf teil (2,4) der Kolonne bildet.

3. Verfahren gemäß einem der Ansprüche 1 oder 2, **dadurch gekennzeichnet, dass** man

   - mit den Stelleingriffen der ersten übergeordneten Hierarchieebene die Abzugsbilanz des Kopf-, Seiten- und Sumpfproduktes beeinflußt,
   - mit den Stelleingriffen der zweiten untergeordneten Hierarchieebene die Aufgabemenge und/oder die Heizleistung und/oder das Aufteilungsverhältnis des Flüssigkeitsstroms am oberen Ende und/oder das Aufteilungsverhältnis des Brüdenstroms am unteren Ende eines längsunterteilten Bereichs der Kolonne beeinflußt.

4. Verfahren gemäß Anspruch 3, **dadurch gekennzeichnet, dass** man mit den Stelleingriffen der zweiten Hierarchieebene nur die Aufgabemenge und/oder das Aufteilungsverhältnis des Flüssigkeitsstroms am oberen Ende des längsunterteilten Bereichs der Trennwandkolonne regelt.

5. Verfahren gemäß einem der Ansprüche 1 bis 4, **dadurch gekennzeichnet, dass** man

   - Meßwerte M1 im Bereich einer Zulaufstelle, bevorzugt in dem Zulaufteil (2) in einer Höhe von 0,2 bis 3 theoretischen Trennstufen oberhalb der Zulaufstelle, bestimmt, und Meßwerte M2 im Teil (2) bestimmt, wobei man die Lage der Meßstelle so wählt, daß die Meßwertdifferenz zwischen M1 und M2 etwa 1/5 bis 4/5, bevorzugt 1/2 der Meßwertdifferenz im ausgeregelten Zustand zwischen der Zulaufstelle und dem oberen Ende des Zulaufteils (2) entspricht; und/oder
   - Meßwerte M4 in dem Zulauf teil (4) bestimmt, wobei man die Lage der Meßstelle so wählt, daß die Meßwertdifferenz zwischen M1 und M4 etwa 1/5 bis 4/5, bevorzugt 1/2 der Meßwertdifferenz im ausgeregelten Zustand zwischen der Zulaufstelle und dem unteren Ende des Zuläufteils (4) entspricht; und/oder
   - Meßwerte M6 im Bereich des oberen Endes der Längsunterteilung, bevorzugt in einem Teil (1) in einer Höhe von 0,2 bis 3 theoretischen Trennstufen oberhalb einer Längsunterteilung der Kolonne, bestimmt, und Meßwerte M3 in einem Teil (3) bestimmt, wobei man die Lage der Meßstelle so wählt, daß die Meßwertdifferenz zwischen M6 und M3 etwa 1/5 bis 4/5, bevorzugt 1/2 der Meßwertdifferenz im aus geregelten Zustand zwischen einer SeitenentnahmeBtelle und dem oberen Ende der Längsunterteilung entspricht; und/oder
   - Meßwerte M7 am unteren Ende der Längsunterteilung, bevorzugt in einem Teil (6) in einer Höhe von 0,2 bis 3 theoretischen Trennstufen unterhalb der Längsunterteilung, bestimmt,und Meßwerte M5 in einem Teil (5) bestimmt, wobei man die Lage der Meßstelle so wählt, daß die Meßwertdifferenz zwischen M7 und M5 etwa 1/5 bis 4/5, bevorzugt 1/2 der Meßwertdifferenz im ausgeregelten Zustand zwischen der Seitenentnahmestelle und dem unteren Ende der Längsunterteilung entspricht.

6. Verfahren gemäß Anspruch 5, bei dem Meßwertdifferenzen Mi - Mj zu mehr als 70%, bevorzugt mehr als 80% nur von einem Meßwert bestimmt werden, **dadurch gekennzeichnet, dass** man in diesen Fällen nur den Meßwert, der den überwiegenden Beitrag liefert, zur Bildung der Stellgröße heranzieht.

**7.** Verfahren einem der Ansprüche 5 oder 6, **dadurch gekennzeichnet, dass** man Regelverstärkungen verwendet, die umgekehrt proportional zu den jeweiligen mittleren Meßwertdifferenzen sind.

**8.** Verfahren gemäß einem der Ansprüche 1 bis 7, **dadurch gekennzeichnet, dass** man die Kopfabzugsmenge oder die Rücklaufmenge der Flüssigkeit am Kolonnenkopf oder das Rücklaufverhältnis der Flüssigkeit am Kolonnenkopf über ein oder mehrere Meßwerte aus dem oberen Teil (1) der Trennwandkolonne gesteuert wird.

**9.** Verfahren gemäß einem der Ansprüche 1 bis 8, **dadurch gekennzeichnet, dass** man die Seitenentnahmemenge, die bevorzugt in flüssiger Form entnommen wird, über einen oder mehrere Meßwerte aus dem Entnahmeteil (3,5) der Trennwandkolonne steuert.

**10.** Verfahren gemäß einem der Ansprüche 1 bis 9, bei dem die Sumpfabzugsmenge mehr als 10%, bevorzugt mehr als 20% der Zulaufmenge beträgt, **dadurch gekennzeichnet, dass** man die Standhaltung in einem Verdampferkreislauf am unteren Ende der Trennwandkolonne über die Entnahmemenge des Sumpfabzugsproduktes steuert.

**11.** Verfahren gemäß einem der Ansprüche 1 bis 9, bei dem die Sumpfabzugsmenge weniger als 20%, bevorzugt weniger als 10% der Zulaufmenge beträgt, und die Seitenentnahmemenge mehr als 50%, bevorzugt mehr als 70% der Zulaufmenge beträgt, **dadurch gekennzeichnet, dass** man die Standhaltung im Verdampferkreislauf am unteren Ende der Trennwandkolonne über die Entnahme des Seitenproduktes steuert und die Sumpfentnahmemenge über ein oder mehrere Meßwerte aus dem Entnahmeteil (3,5) und/oder dem unteren Teil (6) der Trennwandkolonne steuert.

**12.** Verfahren gemäß einem der Ansprüche 8 bis 11, **dadurch gekennzeichnet, dass** man mit Proportionalreglern regelt.

**13.** Verfahren gemäß einem der vorherigen Ansprüche, **dadurch gekennzeichnet, dass** man die Konzentrationsmeßwerte in der Trennwandkolonne durch Temperaturmessungen, Brechungsindexmessungen, Absorptionsmessungen oder gaschromatographische Messungen bestimmt.

**14.** verfahren gemäß einem der vorherigen Ansprüche, **dadurch gekennzeichnet, dass** man den Druck am Kopf der Kolonne über eine Druckregelung auf 5%, bevorzugt 1% des Absolutdrucks nach einem Kondensator oder nach Kondensatoren am Kopf der Kolonne konstant hält.

**15.** Verfahren gemäß einem der vorherigen Ansprüche, **dadurch gekennzeichnet, daß** man den Differenzdruck über die Kolonne über eine Ansteuerung der dem Verdampfer am Sumpf der Kolonne zugeführten Menge des Heizmediums auf 10%, bevorzugt 2% des Absolutdrucks nach dem Kondensator oder nach den Kondensatoren am Kopf der Kolonne konstant hält.

**16.** Verfahren gemäß einem der vorherigen Ansprüche, **dadurch gekennzeichnet, dass** man die Temperatur des flüssigen und/oder dampfförmigen, bevorzugt flüssigen Zulaufgemisches durch Beheizen oder Kühlen in einem engen Temperaturbereich, bevorzugt um 3°C konstant hält, wobei die zulaufende Flüssigkeit bei gepackten Kolonnen über einen Ablaufschacht des Flüssigkeitssammlers leitet und im Fall eines überhitzten Zulaufgemischs ein Ausdampfgefäß vorschaltet.

**Claims**

**1.** A method of regulating a dividing wall column for separating a feed mixture into three fractions, in which the feed mixture is fed to a middle region of the column and a low-boiler fraction is taken off at the top of the column, an intermediate-boiler fraction is taken off in the middle region of the column and a high-boiler fraction is taken off at the lower end of the column, wherein

- measurements for concentration values are obtained at certain points in the region of the longitudinal subdivision of the column by means of direct or indirect measurement methods,
- regulation parameters for regulating the column are constructed from these measurements,
- the regulation strategy is divided into two hierarchical levels, with the adjustment parameters of the second hierarchical level not influencing the regulation of the adjustment parameters of the first hierarchical level,

wherein the adjustment parameters of the first hierarchical level are constructed without measurements from a feed section (2, 4) of the column and the adjustment parameters of the second hierarchical level are constructed predominantly, from measurements from the feed section (2, 4) of the column.

2. A method as claimed in claim 1, wherein the adjustment parameters of the second hierarchical level are constructed exclusively from measurements from a feed section (2, 4) of the column.

3. A method as claimed in one of claims 1 or 2, wherein

- the adjustment parameters of the first, higher hierarchical level are used to influence the offtake balance of the top, side and bottom products,
- the adjustment parameters of the second, subordinate hierarchical level are used to influence the transfer amount and/or the heating power and/or the split ratio of the liquid stream at the upper end and/or the split ratio of the vapor stream at the lower end of the longitudinally subdivided region of the column.

4. A method as claimed in claim 3, wherein the adjustment parameters of the second hierarchical level are used to regulate only the transfer amount and/or the split ratio of the liquid stream at the upper end of a longitudinally subdivided region of the dividing wall column.

5. A method as claimed in any of claims 1 to 4, wherein

- measurements M1 are determined in the region of a feed point, preferably in a feed section (2) at a height of from 0.2 to 3 theoretical plates above the feed point, and measurements M2 are determined in section (2), with the position of the measurement point being selected in such a way that the difference in measurements between M1 and M2 corresponds to from about 1/5 to 4/5, preferably 1/2, of the difference in measurements in the fully regulated state between the feed point and the upper end of the feed section (2); and/or
- measurements M4 are determined in a feed section (4), with the position of the measurement point being selected in such a way that the difference in measurements between M1 and M4 corresponds to from about 1/5 to 4/5, preferably 1/2, of the difference in measurements in the fully regulated state between the feed point and the lower end of the feed section (4); and/or
- measurements M6 are determined in the region of the upper end of the longitudinal subdivision, preferably in a section (1) at a height of from 0.2 to 3 theoretical plates above a longitudinal subdivision of the column, and measurements M3 are determined in a section (3), with the position of the measurement point being selected in such a way that the difference in measurements between M6 and M3 corresponds to from about 1/5 to 4/5, preferably 1/2, of the difference in measurements in the fully regulated state between the side offtake point and the upper end of a longitudinal subdivision; and/or
- measurements M7 are determined at the lower end of the longitudinal subdivision, preferably in a section (6) at a height of from 0.2 to 3 theoretical plates below the longitudinal subdivision, and measurements M5 are determined in a section (5), with the position of the measurement point being selected in such a way that the difference in measurements between M7 and M5 corresponds to from about 1/5 to 4/5, preferably 1/2, of the difference in measurements in the fully regulated state between the side offtake point and the lower end of the longitudinal subdivision.

6. A method as claimed in claim 5, in which the differences in measurements Mi - Mj are determined to an extent of more than 70%, preferably more than 80%, by only one measurement, wherein in these cases only the measurement which gives the predominant contribution is used to construct the adjustment parameter.

7. A method as claimed in one of claims 5 or 6, wherein the regulation multipliers Ki or Ki' which are used are inversely proportional to the respective mean differences in measurements.

8. A method as claimed in any of claims 1 to 7, wherein the top offtake amount or the amount of liquid runback at the top of the column or the reflux ratio of the liquid at the top of the column is controlled via one or more measurements from the upper section (1) of the dividing wall column.

9. A method as claimed in any of claims 1 to 8, wherein the side offtake amount, which is preferably taken up in liquid form, is controlled via one or more measurements from the offtake section (3, 5) of the dividing wall column.

**10.** A method as claimed in any of claims 1 to 9, in which the bottom offtake amount is more than 10%, preferably more than 20%, of the amount of feed, wherein the level in a vaporizer circuit at the lower end of the dividing wall column is controlled via the amount of the bottom offtake product taken off.

**11.** A method as claimed in any of claims 1 to 9, in which the bottom offtake amount is less than 20%, preferably less than 10%, of the amount of feed and the side offtake amount is more than 50%, preferably more than 70%, of the amount of feed, wherein the level in the vaporizer circuit at the lower end of the dividing wall column is controlled via the offtake of the side product and the bottom offtake amount is controlled via one or more measurements from the offtake section (3, 5) and/or the lower section (6) of the dividing wall column.

**12.** A method as claimed in any of claims 8 to 11, wherein regulation is carried out using proportional regulators.

**13.** A method as claimed in any of the preceding claims, wherein the concentration measurements in the dividing wall column are determined by temperature measurements, refractive index measurements, absorption measurements or gas-chromatographic measurements.

**14.** A method as claimed in any of the preceding claims, wherein the pressure at the top of the column is, by means of pressure regulation, kept constant to within $\pm$ 5%, preferably $\pm$ 1%, of the absolute pressure downstream of a condenser or downstream of condensers at the top of the column.

**15.** A method as claimed in any of the preceding claims, wherein the differential pressure over the column is kept constant to within $\pm$ 10%, preferably $\pm$ 2%, of the absolute pressure downstream of the condenser or downstream of the condensers at the top of the column, by controlling the amount of heating medium fed to the vaporizer at the bottom of the column.

**16.** A method as claimed in any of the preceding claims, wherein the temperature of the liquid and/or gaseous, preferably liquid, feed mixture is kept constant within a narrow temperature range, preferably within $\pm$ 3°C, by heating or cooling, where, in the case of packed columns, the feed liquid is conducted via a downflow shaft of the liquid collector and, in the case of a superheated feed mixture, a stripping vessel is arranged upstream.

**Revendications**

**1.** Procédé pour le réglage d'une colonne à paroi de séparation pour la séparation d'un mélange d'alimentation en trois fractions, dans lequel on introduit le mélange d'alimentation dans une zone médiane de la colonne et on recueille en tête de colonne une fraction à bas point d'ébullition, dans la zone médiane de la colonne une fraction à point d'ébullition moyen et à l'extrémité inférieure de la colonne une fraction à point d'ébullition élevé, tandis que

- l'on obtient des valeurs de mesure pour les valeurs de concentration à des endroits déterminés dans la zone de la division longitudinale de la colonne, par des méthodes de mesure directes ou indirectes,
- on élabore à partir de ces valeurs de mesure des interventions de réglage pour le réglage de la colonne,
- on divise la stratégie de réglage en deux plans hiérarchiques, tandis que les actions d'ajustement du deuxième plan hiérarchique de réglage ont une influence sur les interventions de réglage du premier plan hiérarchique,

tandis que l'on élabore les interventions de réglage du deuxième plan hiérarchique sans les valeurs de mesure provenant d'une partie d'alimentation (2,4) de la colonne et on élabore les interventions de réglage du deuxième plan hiérarchique essentiellement à partir de valeurs de mesure issues de la partie d'alimentation (2,4) de la colonne.

**2.** Procédé selon la revendication 1, **caractérisé par le fait qu'**on élabore les actions d'ajustement du deuxième plan hiérarchique exclusivement à partir de valeurs de mesure provenant d'une partie d'alimentation (2,4). de la colonne.

**3.** Procédé selon l'une des revendications 1 ou 2, **caractérisé par le fait qu'**on

- influe avec les actions d'ajustement du premier plan hiérarchique supérieur sur le bilan de soutirage du produit de tête, latéral et de fond,
- influe avec les actions d'ajustement du deuxième plan hiérarchique inférieur sur la quantité de charge et/ ou l'apport de chaleur et/ ou le rapport de répartition du courant de fluides à l'extrémité supérieure et/ou le rapport de répartition du courant de vapeurs à l'extrémité inférieure d'une zone divisée longitudinalement de la colonne.

4. Procédé selon la revendication 3, **caractérisé par le fait qu'**on règle avec les actions d'ajustement du deuxième plan hiérarchique uniquement la quantité de charge et/ou le rapport de répartition du courant de fluides à l'extrémité supérieure de la zone divisée longitudinalement de la colonne à paroi de séparation.

5. Procédé selon l'une des revendications 1 à 4, **caractérisé par le fait qu'**on

- détermine des valeurs de mesure M1 dans la zone d'un emplacement d'introduction, de préférence dans la partie d'introduction (2) dans une hauteur de 0,2 à 3 étages de séparation théoriques au-dessus de l'emplacement d'introduction, et on détermine des valeurs de mesure M2 dans la partie (2), tandis qu'on choisit la position de l'emplacement de mesure de telle manière que la différence des valeurs de mesure entre M1 et M2 corresponde à environ 1/5 à 4/5, de préférence 1/2 de la différence des valeurs de mesure dans l'état complètement réglé entre l'emplacement d'introduction et l'extrémité supérieure de la partie d'introduction (2); et/ ou
- détermine des valeurs de mesure M4 dans la partie d'introduction (4), tandis qu'on choisit la position de l'emplacement de mesure de telle manière que la différence des valeurs de mesure entre M1 et M4 corresponde à environ 1/5 à 4/5, de préférence à 1/2 de la différence des mesures dans l'état complètement réglé entre l'emplacement d'introduction et l'extrémité inférieure de la partie d'introduction (4); et/ ou
- détermine des valeurs de mesure M6 dans la zone de l'extrémité supérieure de la division longitudinale, de préférence dans une partie (1) sur une hauteur de 0,2 à 3 étages de séparation théoriques au-dessus d'une division longitudinale de la colonne, et on détermine une valeur de mesure M3 dans une partie (3), tandis qu'on choisit la position de l'emplacement de mesure de telle manière que la différence des valeurs de mesure entre M6 et M3 corresponde à environ 1/5 à 4/5, de préférence 1/2 de la différence des valeurs de mesure dans l'état complètement réglé entre l'emplacement de prélèvement latéral et l'extrémité supérieure de la division longitudinale; et/ ou
- détermine des valeurs de mesure M7 à l'extrémité inférieure de la division longitudinale, de préférence dans une partie (6) sur une hauteur de 0,2 à 3 étages de séparation théoriques en dessous de la répartition longitudinale, et
- détermine des valeurs de mesure M5 dans une partie (5), tandis que l'emplacement de la position de mesure est choisi de telle manière que la différence des valeurs de mesure entre M7 et M5 corresponde à environ 1/5 à 4/5, de préférence à 1/2 de la différence des mesures dans l'état complètement réglé entre l'emplacement de soutirage latéral et l'extrémité inférieure de la division longitudinale.

6. Procédé selon la revendication 5, dans lequel des différences de valeurs de mesure Mi - Mj de plus de 70%, de préférence de plus de 80%, ne sont déterminées que par une valeur de mesure, **caractérisé par le fait qu'**on ne fait appel dans ces cas-là pour la formation de la variable de réglage qu'à la valeur de mesure qui procure la contribution prépondérante.

7. Procédé selon l'une des revendications 5 ou 6, **caractérisé par le fait qu'**on utilise des amplifications de réglage qui sont inversement proportionnelles aux différences des valeurs de mesure moyennes concernées.

8. Procédé selon l'une des revendications 1 à 7, **caractérisé par le fait qu'**on commande la quantité de soutirage en tête ou la quantité de recyclage du fluide en tête de colonne ou le rapport de recyclage du fluide en tête de colonne par l'intermédiaire d'une ou plusieurs valeurs de mesure issues de la partie supérieure (1) de la colonne à paroi de séparation.

9. Procédé selon l'une des revendications 1 à 8, **caractérisé par le fait qu'**on commande la quantité de soutirage latéral, qui est de préférence prélevée sous forme liquide, par l'intermédiaire d'une ou plusieurs valeurs de mesure issues de la partie de soutirage (3,5) de la colonne à paroi de séparation.

10. Procédé selon l'une des revendications 1 à 9, dans lequel la quantité de soutirage du fond représente plus de 10%, de préférence plus de 20% de la quantité d'introduction, **caractérisé par le fait qu'**on commande le maintien dans un circuit de vaporisation à l'extrémité inférieure de la colonne à paroi de séparation par l'intermédiaire de la quantité prélevée du produit à évacuation par le fond.

**11.** Procédé selon l'une des revendications 1 à 9, dans lequel la quantité d'évacuation par le fond représente moins de 20%, de préférence moins de 10% de la quantité d'introduction, et la quantité de prélèvement latéral représente plus de 50%, de préférence plus de 70% de la quantité d'introduction, **caractérisé par le fait qu'**on commande le maintien dans le circuit de vaporisation à l'extrémité inférieure de la colonne à paroi de séparation par l'intermédiaire du soutirage de produit latéral, et on commande la quantité de soutirage par le fond par l'intermédiaire d'une ou plusieurs valeurs de mesure issues de la partie de prélèvement (3,5) et/ou de la partie inférieure (6) de la colonne à paroi de séparation.

**12.** Procédé selon l'une des revendications 8 à 11, **caractérisé par le fait qu'**on règle avec des dispositifs de réglage proportionnels.

**13.** Procédé selon l'une des revendications précédentes, **caractérisé par le fait qu'**on détermine les valeurs de mesure de concentration dans la colonne à paroi de séparation par des mesures de température, des mesures d'indice de réfraction, des mesures d'absorption ou des mesures chromatographiques.

**14.** Procédé selon l'une des revendications précédentes, **caractérisé par le fait qu'**on maintient constante la pression en tête de la colonne par l'intermédiaire d'un réglage de pression à 5%, de préférence à 1% de la pression absolue après un condenseur ou après des condenseurs en tête de la colonne.

**15.** Procédé selon l'une des revendications précédentes, **caractérisé par le fait qu'**on maintient constante la différence de pression sur la colonne par l'intermédiaire d'un ajustement de la quantité du moyen de chauffage fournie au condenseur dans le fond de la colonne, à 10%, de préférence à 2% de la pression absolue après le condenseur ou après les condenseurs en tête de la colonne.

**16.** Procédé selon l'une des revendications précédentes, **caractérisé par le fait qu'**on maintient constante la température du mélange d'introduction liquide et/ou à l'état de vapeur, de préférence liquide, par chauffage ou refroidissement dans un intervalle de température étroit, de préférence de 3°C, tandis que le liquide introduit pour des colonnes garnies est acheminé par l'intermédiaire d'un conduit d'écoulement du collecteur de liquide, et que dans le cas d'un mélange d'introduction surchauffé un récipient de vaporisation est intercalé.

**Fig. 1**